# EUROPEAN PATENT SPECIFICATION

(11) **EP 3 198 352 B1**
(45) Date of publication and mention of the grant of the patent: **06.01.2021**
(21) Application number: 15775885.5
(22) Date of filing: 24.09.2015
(51) Int. Cl.: G05D 23/19, F25B 9/04

(54) **VORTEX TUBE TEMPERATURE CONTROL FOR PROCESS CONTROL DEVICES**
WIRBELROHRTEMPERATURREGELUNG FÜR PROZESSSTEUERVORRICHTUNGEN
RÉGULATION DE TEMPÉRATURE PAR TUBE À TOURBILLON POUR DISPOSITIFS DE COMMANDE DE PROCESSUS

(30) Priority: 24.09.2014 US 201414495579
(43) Date of publication of application: 02.08.2017
(73) Proprietor: Fisher Controls International LLC, Marshalltown, IA 50158 (US)
(72) Inventor: JACKSON, Trenton, Frank, Marshalltown, IA 50158 (US)
(74) Representative: Petraz, Gilberto Luigi
(86) International application number: PCT/US2015/051810
(87) International publication number: WO 2016/049246

(56) References cited:
- US-A- 2 737 028
- US-A- 3 285 055
- US-A- 5 603 746

## Description

### FIELD OF THE DISCLOSURE

This disclosure relates generally to vortex tube temperature control for process control devices.

### BACKGROUND

Process control systems typically include numerous process control field devices, some of which may be exposed to operating environments in which the ambient temperature is relatively high or low, and/or varies widely. Such temperature conditions may have an adverse effect on the operation of the field devices because many of the components of these field devices are designed to work in more moderate environments. Some field devices may be enclosed in protective housings. However, these housings are not effective to prevent the field devices from being affected by extreme temperatures or temperature changes. Known temperature control systems are described for example in documents US 2737028 A, US 3285055 A and US 5603746 A.

### SUMMARY

An example apparatus comprises a housing, a process control device disposed in the housing, and a vortex tube disposed in the housing to regulate an operating temperature of the process control device. The vortex tube has a fluid inlet to receive a fluid, a first fluid outlet and a second fluid outlet. A temperature of a first portion of the fluid at the first fluid outlet is greater than a temperature of the second portion of the fluid at the second fluid outlet and a temperature of a fluid at the fluid inlet. The first fluid outlet discharges the first portion of the fluid to regulate the operating temperature of the process control device.

An example method comprises measuring a temperature of at least one of a process control device disposed in a housing or an interior of the housing, delivering a fluid to the housing via a vortex tube and adjusting, based on the measured temperature, a flow of the fluid through the vortex tube to maintain a substantially constant operating temperature of the device and/or the interior of the housing.

### BRIEF DESCRIPTION OF THE DRAWINGS

FIG. 1 is a schematic block diagram of an example apparatus in accordance with the teachings of this disclosure.
FIG. 2 is a schematic block diagram of another example apparatus in accordance with the teachings of this disclosure.
FIG. 3 is a schematic block diagram of yet another example apparatus that is not part of the invention.
FIG. 4 is a flowchart representing an example method that may be implemented with the any of the example apparatus herein.
FIG. 5 is a diagram of a processor platform which may be used with any of the examples disclosed herein.

### DETAILED DESCRIPTION

The example apparatus disclosed herein includes a vortex tube disposed in a housing containing a process control field device. The vortex tube described herein has a fluid inlet, a hot fluid outlet and a cold fluid outlet. The fluid from the hot fluid outlet is used to heat an interior cavity of the process control device housing to maintain a substantially constant, moderate local ambient temperature surrounding the process control device, even in extremely cold environments. The temperature of the fluid exiting the hot fluid outlet of the vortex tube can be adjusted by changing a flow of fluid entering the inlet of the vortex tube and/or changing the flow of fluid exiting the hot fluid outlet.

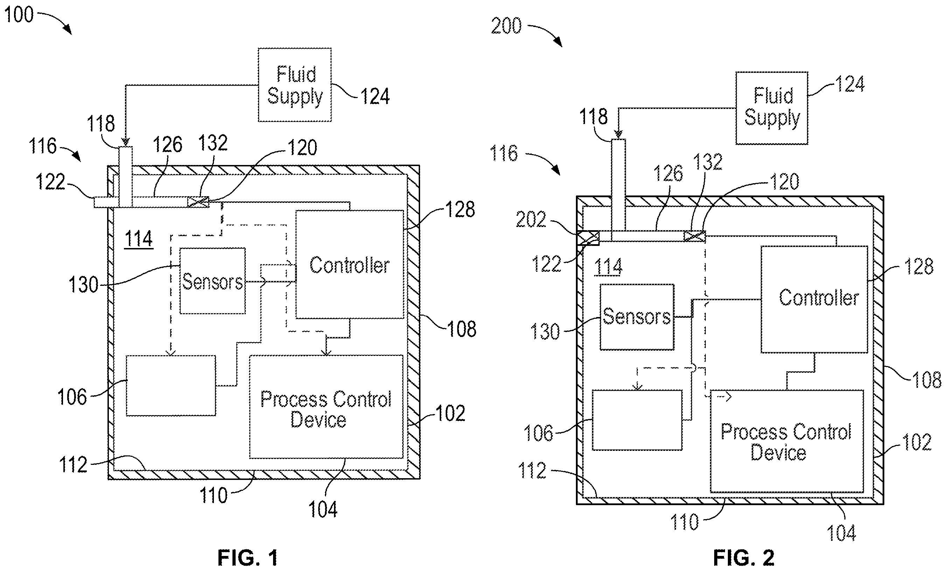

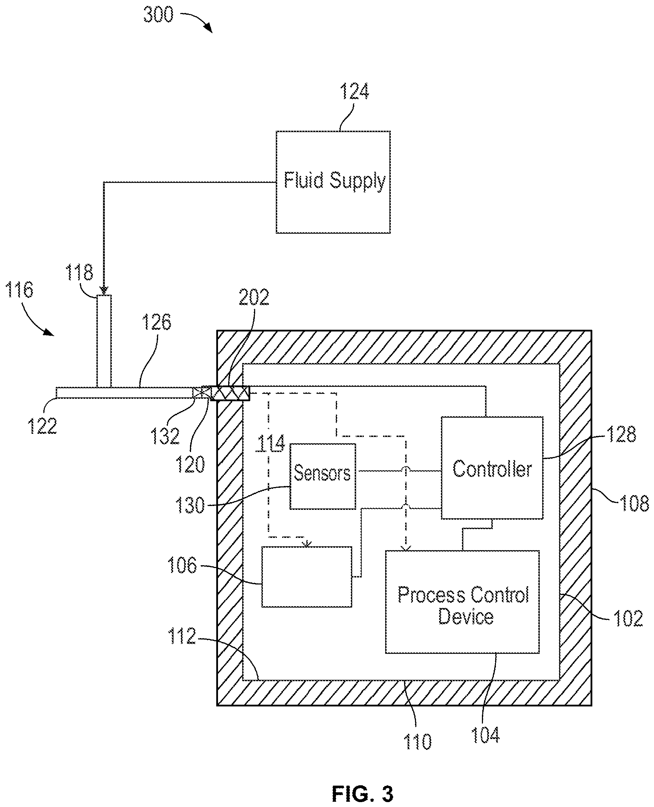

An example apparatus 100 described in FIG. 1 contains components that are substantially similar or identical to the components of other example apparatus 200 and 300 of FIGS. 2 and 3, respectively. These similar or identical components have been numbered consistently throughout FIGS. 1-3.

Referring to FIG. 1, the example apparatus 100 includes a housing 102 in which a process control field device 104 (e.g. a valve) is disposed. The housing 102 in the example apparatus 100 fully encloses the process control device 104 but, in other examples, the housing 102 may partially enclose the process control device 104, may enclose one or more additional components 106 and/or may enclose multiple process control devices. The housing 102 may also include an insulation layer 108 to cover at least a portion of the housing 102. The insulation layer 108 may be a thermal coating including one or more layers or may be a removable layer (e.g. a fabric jacket). The insulation layer 108 may be applied to an exterior wall 110 of the housing 102, as shown, and/or to an interior wall 112 of the housing 102.

In the example apparatus 100, a vortex tube 116 is disposed in the housing 102. As shown in the example apparatus 100 of FIG. 1, the vortex tube 116 is coupled to the housing 102 to regulate a temperature of an interior cavity 114 of the housing 102, a temperature of the process control device 104 disposed in the housing 102, and/or a temperature of the other components 106 disposed in the housing 102. The components 106 may be separate from the process control device 104, as shown, or may be a part of (e.g. integrated to) the process control device 104.

The vortex tube 116 of example apparatus 100 has a fluid inlet 118, a first fluid outlet 120, and a second fluid outlet 122. A fluid supply 124 provides a compressed or pressurized fluid to the fluid inlet 118 and enters the vortex tube 116 perpendicular to a body 126 of the vortex tube 116. The fluid supply 124 may be a system dedicated to provide compressed or pressurized fluid to the vortex tube 116. Alternatively, the fluid supply 124 may also provide compressed or pressurized fluid elsewhere in the process control system.

Fluid exiting the first fluid outlet 120 has a temperature higher than that of fluid exiting the second fluid outlet 122. In the example apparatus 100, the fluid exiting the first fluid outlet 120 is directed to heat the interior cavity 114 of the housing 102 and/or the process control device 104. The fluid from the first fluid outlet 120 may be divided, via fluid passageways or ducts, into multiple portions or streams upon exiting the first fluid outlet 120. These fluid streams may also be used to heat one or more additional components 106 within the housing 102. The fluid from the second fluid outlet 122 is exhausted external to the housing 102. As shown in FIG. 1, the second fluid outlet 122 of the vortex tube 116 may be positioned so that the second fluid outlet 122 passes through the housing 102 and the insulation layer 108.

The example apparatus 100 includes a controller 128 coupled to one or more sensors 130 to measure a temperature of the interior cavity 114 of the housing 102, an operating temperature of the process control device 104, and/or the temperatures of the one or more additional components 106. In operation, the controller 128 may adjust the flow of fluid through the fluid inlet 118 of the vortex tube 116, via the fluid supply 124, to adjust, control or regulate the temperature of the fluid exiting the first fluid outlet 120 of the vortex tube 116. The temperature of the fluid and the flow rate of fluid from the first fluid outlet 120 of the vortex tube 116 into the interior cavity 114 of the housing 102 may also be adjusted by adjusting a valve 132 at the first fluid outlet. Decreasing the flow rate of fluid at the first fluid outlet 120 of the vortex tube 116 increases the temperature of the fluid, while increasing the flow rate of the fluid at the first fluid outlet 120 of the vortex tube 116 decreases the temperature of the fluid.

The example apparatus 200 of FIG. 2 is similar to example apparatus 100 of FIG. 1. However, the vortex tube 116 of example apparatus 200 is located entirely within the interior cavity 114 of the housing 102 such that a vent 202 is used to exhaust the fluid exiting the second fluid outlet 122 exterior to the housing. The vent 202 is fluidly coupled to the second fluid outlet 122 and passes through the housing 102 and the insulation layer 108.

The example apparatus of 300 of FIG. 3 is also similar to example apparatus 100 of FIG. 1. In example apparatus 300, the vortex tube 116 is positioned entirely exterior to the housing 102. The vent 202 is fluidly coupled to the first fluid outlet 120 and passes through the insulation layer 108 and housing 102 to heat the interior cavity 114, the process control device 104 and/or components 106 inside the housing 102.

The example controller 128 of FIGS. 1-3 may be implemented by hardware, software, firmware and/or any combination of hardware, software and/or firmware. Thus, the example controller 128 could be implemented by one or more analog or digital circuit(s), logic circuits, programmable processor(s), application specific integrated circuit(s) (ASIC(s)), programmable logic device(s) (PLD(s)) and/or field programmable logic device(s) (FPLD(s)). When reading any of the apparatus or method claims of this patent to cover a purely software and/or firmware implementation, the example controller 128 is hereby expressly defined to include a tangible computer readable storage device or storage disk such as a memory, a digital versatile disk (DVD), a compact disk (CD), a Blu-ray disk, etc. storing the software and/or firmware. Further still, the example controller 128 of FIGS. 1-3 may include one or more elements, processes and/or devices and/or may include more than one of any or all of the elements, processes and devices.

Additionally, the example controller 128 of FIGS. 1-3 may communicate with one or more of the sensors 130 or the flow control member(s) 132 using any type of wired connection (e.g., a databus, a USB connection, etc.) or a wireless communication mechanism (e.g., radio frequency, infrared, etc.) using any past, present or future communication protocol (e.g., Bluetooth, USB 2.0, USB 3.0, etc.). Further, one or more of the controller 128 or the flow control member(s) 132 of FIGS. 1-3 may communicate with each other using such wired connection or wireless communication mechanism.

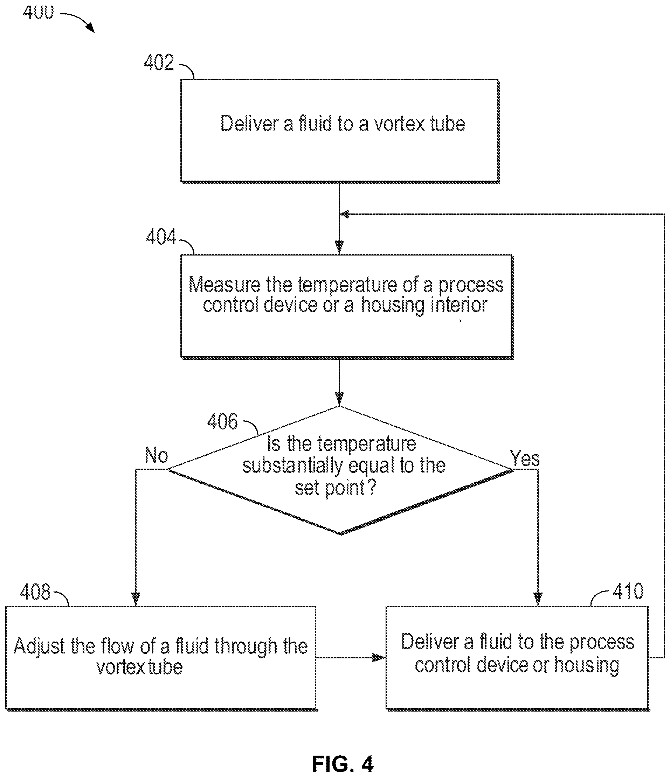

FIG. 4 is a flowchart representing an example method 400 that may be implemented with the example apparatus described herein. Initially, a fluid is provided to the fluid inlet 118 of the vortex tube 116 via the fluid supply 124 (block 402). The fluid supply 124 may be a fluid supply shared with one or more other components 106, where the portion of fluid for the vortex tube 116 has been diverted from the existing fluid supply 124. The fluid may also be obtained from a fluid supply 124 dedicated to provide compressed or pressurized fluid, specifically for the purpose of supplying fluid to the fluid inlet 118 of the vortex tube 116.

The controller 128 measures the temperature of at least the process control device 104 and/or the interior cavity 114 of the housing 102 (block 404). The controller 128 then determines if the temperature of the process control device 104 or the interior cavity 114 of the housing 102 is substantially equal to a set point temperature (block 406) by comparing the measured temperature to the set point temperature. If the measured temperature is not substantially equal to (e.g. within a 10°C differential of) the set point temperature, the flow through the vortex tube 116 is adjusted (block 408) before being directed toward the process control device 104 or the interior cavity 114 of the housing 102 (block 410). The flow can be adjusted by changing a pressure of the fluid at the fluid inlet 118 of the vortex tube 116 and/or by changing a flow of the fluid at the first fluid outlet 120 of the vortex tube 116 using, for example, the valve 132.

If the measured temperature and the set point temperature are substantially equal at block 406, the fluid from the first fluid outlet 120 is directed to at least the process control device 104 or the interior cavity 114 of the housing 102 (block 410) without first adjusting the flow of the fluid through the vortex tube 116. The fluid from the first fluid outlet 120 may be divided into multiple portions, at least one of which is diverted process control device 104 or the interior cavity 114 of the housing 102. One or more of the other portions may be diverted to other components 106 of the process control device 104.

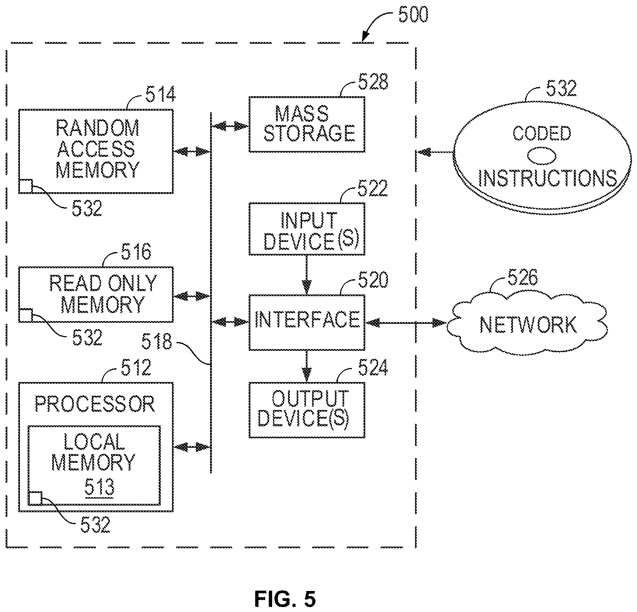

In this example, at least a portion of the method represented by the flowchart in FIG. 4 may be implemented using machine readable instructions that comprise a program for execution by a processor such as the processor 512 shown in the example processor platform 500 discussed below in connection with FIG. 5. The program may be embodied in software stored on a tangible computer readable storage medium such as a CD-ROM, a floppy disk, a hard drive, a digital versatile disk (DVD), a Blu-ray disk, or a memory associated with the processor 512, but the entire program and/or parts thereof could alternatively be executed by a device other than the processor 512 and/or embodied in firmware or dedicated hardware. Further, although the example program is described with reference to the flowchart illustrated in FIG. 4, many other methods of implementing the example apparatus described herein may alternatively be used. For example, the order of execution of the blocks may be changed, and/or some of the blocks described may be changed, eliminated, or combined.

As mentioned above, at least a portion of the example method of FIG. 4 may be implemented using coded instructions (e.g., computer and/or machine readable instructions) stored on a tangible computer readable storage medium such as a hard disk drive, a flash memory, a read-only memory (ROM), a compact disk (CD), a digital versatile disk (DVD), a cache, a random-access memory (RAM) and/or any other storage device or storage disk in which information is stored for any duration (e.g., for extended time periods, permanently, for brief instances, for temporarily buffering, and/or for caching of the information). As used herein, the term tangible computer readable storage medium is expressly defined to include any type of computer readable storage device and/or storage disk and to exclude propagating signals and to exclude transmission media. As used herein, "tangible computer readable storage medium" and "tangible machine readable storage medium" are used interchangeably. Additionally or alternatively, the example method of FIG. 4 may be implemented using coded instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

FIG. 5 is a block diagram of an example processor platform 500 capable of executing instructions to implement at least a portion of the method of FIG. 4. The processor platform 500 can be, for example, a server, a personal computer, a mobile device (e.g., a cell phone, a smart phone, a tablet such as an iPad™), a personal digital assistant (PDA), an Internet appliance or any other type of computing device.

The processor platform 500 of the illustrated example includes a processor 512. The processor 512 of the illustrated example is hardware. For example, the processor 512 can be implemented by one or more integrated circuits, logic circuits, microprocessors or controllers from any desired family or manufacturer.

The processor 512 of the illustrated example includes a local memory 513 (e.g., a cache). The processor 512 of the illustrated example is in communication with a main memory including a volatile memory 514 and a non-volatile memory 516 via a bus 518. The volatile memory 514 may be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 516 may be implemented by flash memory and/or any other desired type of memory device. Access to the main memory 514, 516 is controlled by a memory controller.

The processor platform 500 of the illustrated example also includes an interface circuit 520. The interface circuit 520 may be implemented by any type of interface standard, such as an Ethernet interface, a universal serial bus (USB), and/or a PCI express interface.

In the illustrated example, one or more input devices 522 are connected to the interface circuit 520. The input device(s) 522 permit(s) a user to enter data and commands into the processor 512. The input device(s) 522 can be implemented by, for example, an audio sensor, a microphone, a camera (still or video), a keyboard, a button, a mouse, a touchscreen, a track-pad, a trackball, isopoint and/or a voice recognition system.

One or more output devices 524 are also connected to the interface circuit 520 of the illustrated example. The output devices 524 can be implemented, for example, by display devices (e.g., a light emitting diode (LED), an organic light emitting diode (OLED), a liquid crystal display, a cathode ray tube display (CRT), a touchscreen, a tactile output device, a printer and/or speakers). The interface circuit 520 of the illustrated example, thus, typically includes a graphics driver card, a graphics driver chip or a graphics driver processor.

The interface circuit 520 of the illustrated example also includes a communication device such as a transmitter, a receiver, a transceiver, a modem and/or network interface card to facilitate exchange of data with external machines (e.g., computing devices of any kind) via a network 526 (e.g., an Ethernet connection, a digital subscriber line (DSL), a telephone line, coaxial cable, a cellular telephone system, etc.).

The processor platform 500 of the illustrated example also includes one or more mass storage devices 528 for storing software and/or data. Examples of such mass storage devices 528 include floppy disk drives, hard drive disks, compact disk drives, Blu-ray disk drives, RAID systems, and digital versatile disk (DVD) drives.

Coded instructions 532 to implement at least a portion of the method 400 of FIG. 4 may be stored in the mass storage device 528, in the volatile memory 514, in the non-volatile memory 516, and/or on a removable tangible computer readable storage medium such as a CD or DVD.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

## Claims

1. An apparatus comprising:
a housing (102);
a process control device (104) disposed in the housing (102); and
a vortex tube (116) disposed within the housing (102) to regulate an operating temperature of the process control device (104), the vortex tube (116) having a fluid inlet (118) to receive a fluid, a first fluid outlet (120) and a second fluid outlet (122),
the apparatus comprises a controller (128) configured to measure at least one of a temperature of an interior (114) of the housing (102) or the operating temperature of the process control device (104) and to adjust a flow of the fluid at the inlet (118) of the vortex tube (116) to maintain a substantially constant temperature of at least one of the interior (114) of the housing (102) or the process control device (104); wherein
a temperature of a first portion of the fluid at the first fluid outlet (120) is greater than a temperature of the second portion of the fluid at the second fluid outlet (122) and a temperature of a fluid at the fluid inlet (118),
the apparatus being **characterized in that**
the first fluid outlet (120) being able to discharge the first portion of the fluid into the housing such that the vortex tube (116) heats the interior (114) of the housing to regulate the operating temperature of the process control device (104).

2. The apparatus of claim 1, further comprising an insulation layer (108) coupled to the housing (102).

3. The apparatus of claim 2, wherein the insulation layer (108) comprises a coating applied to the housing (102).

4. The apparatus of claim 2, wherein the insulation layer (108) comprises a removable cover to at least partially cover an exterior of the housing (102).

5. The apparatus of claim 1, wherein the second portion of the fluid at the second fluid outlet (122) is exhausted to an ambient environment exterior to the housing (102) via a vent (202).

6. The apparatus of claim 1, further comprising a fluid source (124) to deliver the fluid to the fluid inlet (118) of the vortex tube (116).

7. The apparatus of claim 6, wherein the fluid source (124) is a fluid diverted from a fluid supply for the process control device (104).

8. A method comprising:
measuring a temperature of at least one of a process control device (104) disposed in a housing (102) or an interior (114) of the housing (102); and
delivering a heated fluid into the housing (102) via a first fluid outlet (120) of a vortex tube (116); the vortex tube having the first fluid outlet (120) and a second fluid outlet (122);
wherein the vortex tube (116) is disposed within the housing (102) to regulate an operating temperature of the process control device (104); and
a temperature of a first portion of the fluid at the first fluid outlet (120) is greater than a temperature of a second portion of the fluid at the second fluid outlet (122) and a temperature of a fluid at the fluid inlet (118);
**characterized in that**
a flow of fluid through the first fluid outlet (120) into the housing is adjusted, based on the temperature, by a controller (128) that adjusts the flow of fluid through the fluid inlet (118) of the vortex tube (116) such that the vortex tube (116) heats the interior (114) of the housing to regulate the operating temperature of the process control device (104).

9. The method of claim 8, further comprising diverting a portion of the fluid from a fluid supply (124) for the process control device (104) to the fluid inlet (118) of the vortex tube (116).

10. The method of claim 8, further comprising dividing the flow of the first portion of the fluid from the first fluid outlet (120) of the vortex tube (116) into a first stream and a second stream, the first and second streams being able to heat a first component (106) and a second component of the process control device (104), respectively.

11. The method of claim 10, further comprising directing the second portion of the fluid at the second fluid outlet (122) of the vortex tube (116) to an ambient environment exterior to the housing (102).

## Patentansprüche

1. Vorrichtung umfassend:
ein Gehäuse (102);
eine Prozesssteuervorrichtung (104), die im Gehäuse (102) angeordnet ist; und
ein Wirbelrohr (116), das innerhalb des Gehäuses (102) angeordnet ist, um eine Betriebstemperatur der Prozesssteuervorrichtung (104) zu regeln, wobei das Wirbelrohr (116) einen Fluideinlass (118) zur Aufnahme eines Fluids, einen ersten Fluidauslass (120) und einen zweiten Fluidauslass (122) hat,
wobei die Vorrichtung einen Regler (128) umfasst, der dazu eingerichtet ist, zumindest eine von einer Temperatur eines Inneren (114) des Gehäuses (102) oder die Betriebstemperatur der Prozesssteuervorrichtung (104) zu messen und eine Strömung des Fluids am Einlass (118) des Wirbelrohrs (116) anzupassen, um eine im Wesentlichen konstante Temperatur von zumindest einem/einer von dem Inneren (114) des Gehäuses (102) oder der Prozesssteuervorrichtung (104) aufrechtzuerhalten; worin
eine Temperatur eines ersten Anteils des Fluids am ersten Fluidauslass (120) höher als eine Temperatur des zweiten Anteils des Fluids am zweiten Fluidauslass (122) und als eine Temperatur eines Fluids am Fluideinlass (118) ist,
worin die Vorrichtung **dadurch gekennzeichnet ist, dass**
der erste Fluidauslass (120) den ersten Anteil des Fluids in das Gehäuse ableiten kann, so dass das Wirbelrohr (116) das Innere (114) des Gehäuses erwärmt, um die Betriebstemperatur der Prozesssteuervorrichtung (104) zu regeln.

2. Vorrichtung nach Anspruch 1, ferner umfassend eine Isolierschicht (108), die mit dem Gehäuse (102) gekoppelt ist.

3. Vorrichtung nach Anspruch 2, worin die Isolierschicht (108) eine Beschichtung umfasst, die auf das Gehäuse (102) aufgebracht ist.

4. Vorrichtung nach Anspruch 2, worin die Isolierschicht (108) eine abnehmbare Abdeckung umfasst, um ein Äußeres des Gehäuses (102) zumindest teilweise abzudecken.

5. Vorrichtung nach Anspruch 1, worin der zweite Anteil des Fluids am zweiten Fluidauslass (122) zu einer umliegenden Umgebung, die außerhalb des Gehäuses (102) liegt, über eine Entlüftungsöffnung (202) abgelassen wird.

6. Vorrichtung nach Anspruch 1, ferner umfassend eine Fluidquelle (124), um dem Fluideinlass (118) des Wirbelrohrs (116) das Fluid zu liefern.

7. Vorrichtung nach Anspruch 6, worin die Fluidquelle (124) ein Fluid ist, das von einer Fluidversorgung für die Prozesssteuervorrichtung (104) umgeleitet ist.

8. Verfahren umfassend:
Messen einer Temperatur von zumindest einer/einem von einer Prozesssteuervorrichtung (104), die in einem Gehäuse (102) angeordnet ist, oder einem Inneren (114) des Gehäuses (102); und
Liefern eines erwärmten Fluids in das Gehäuse (102) hinein über einen ersten Fluidauslass (120) eines Wirbelrohrs (116); wobei das Wirbelrohr den ersten Fluidauslass (120) und einen zweiten Fluidauslass (122) aufweist;
worin das Wirbelrohr (116) innerhalb des Gehäuses (102) angeordnet ist, um eine Betriebstemperatur der Prozesssteuervorrichtung (104) zu regeln; und
eine Temperatur eines ersten Anteils des Fluids am ersten Fluidauslass (120) höher als eine Temperatur eines zweiten Anteils des Fluids am zweiten Fluidauslass (122) und als eine Temperatur eines Fluids am Fluideinlass (118) ist;
**dadurch gekennzeichnet, dass**
eine Strömung des Fluids durch den ersten Fluidauslass (120) in das Gehäuse (102), aufgrund der Temperatur, durch einen Regler (128) angepasst wird, der die Strömung des Fluids durch den Fluideinlass (118) des Wirbelrohrs (116) angepasst wird, so dass das Wirbelrohr (116) das Innere (114) des Gehäuses (102) erwärmt, um die Betriebstemperatur der Prozesssteuervorrichtung (104) zu regeln.

9. Verfahren nach Anspruch 8, ferner umfassend das Umleiten eines Anteils des Fluids von einer Fluidversorgung (124) für die Prozesssteuervorrichtung (104) an den Fluideinlass (118) des Wirbelrohrs (116).

10. Verfahren nach Anspruch 8, ferner umfassend das Teilen der Strömung des ersten Anteils des Fluids vom ersten Fluidauslass (120) des Wirbelrohrs (116) in einen ersten Strom und einen zweiten Strom, wobei die ersten und zweiten Ströme jeweils eine erste Komponente (106) und eine zweite Komponente der Prozesssteuervorrichtung (104) erwärmen können.

11. Verfahren nach Anspruch 10, ferner umfassend das Lenken des zweiten Anteils des Fluids am zweiten Fluidauslass (122) des Wirbelrohrs (116) zu einer umliegenden Umgebung, die außerhalb des Gehäuses (102) liegt.

## Revendications

1. Appareil comprenant :
un boîtier (102) ; et
un dispositif de commande de processus (104) disposé dans le boîtier (102) ; et
un tube vortex (116) disposé à l'intérieur du boîtier (102) pour réguler une température de fonctionnement du dispositif de commande de processus (104), le tube vortex (116) ayant une entrée de fluide (118) pour recevoir un fluide, une première sortie de fluide (120) et une seconde sortie de fluide (122),
l'appareil comprend un contrôleur (128) configuré pour mesurer au moins l'une d'une température d'un intérieur (114) du boîtier (102) ou de la température de fonctionnement du dispositif de commande de processus (104) et pour ajuster un écoulement du fluide à l'entrée (118) du tube vortex (116) pour maintenir une température sensiblement constante d'au moins l'un de l'intérieur (114) du boîtier (102) ou du dispositif de commande de processus (104) ; où une température d'une première partie du fluide au niveau de la première sortie de fluide (120) est supérieure à une température de la seconde partie du fluide au niveau de la seconde sortie de fluide (122) et à une température d'un fluide au niveau de l'entrée de fluide (118),
l'appareil étant **caractérisé en ce que** la première sortie de fluide (120) est capable de décharger la première partie du fluide dans le boîtier de sorte que le tube vortex (116) chauffe l'intérieur (114) du boîtier pour réguler la température de fonctionnement du dispositif de commande de processus (104).

2. Appareil selon la revendication 1, comprenant en outre une couche isolante (108) couplée au boîtier (102).

3. Appareil selon la revendication 2, où la couche isolante (108) comprend un revêtement appliqué au boîtier (102).

4. Appareil selon la revendication 2, où la couche isolante (108) comprend un couvercle amovible pour recouvrir au moins partiellement l'extérieur du boîtier (102).

5. Appareil selon la revendication 1, où la seconde partie du fluide au niveau de la seconde sortie de fluide (122) est évacuée vers un environnement ambiant extérieur au boîtier (102) par l'intermédiaire d'un évent (202).

6. Appareil selon la revendication 1, comprenant en outre une source de fluide (124) pour délivrer le fluide à l'entrée de fluide (118) du tube vortex (116).

7. Appareil selon la revendication 6, où la source de fluide (124) est un fluide dévié d'une alimentation en fluide pour le dispositif de commande de processus (104).

8. Procédé comprenant :
la mesure d'une température d'au moins un dispositif de commande de processus (104) disposé dans un boîtier (102) ou à l'intérieur (114) du boîtier (102) ; et
la distribution d'un fluide chauffé dans le boîtier (102) par l'intermédiaire d'une première sortie de fluide (120) d'un tube vortex (116) ; le tube vortex ayant la première sortie de fluide (120) et une seconde sortie de fluide (122) ;
où le tube vortex (116) est disposé à l'intérieur du boîtier (102) pour réguler une température de fonctionnement du dispositif de commande de processus (104) ; et
une température d'une première partie du fluide au niveau de la première sortie de fluide (120) est supérieure à une température d'une seconde partie du fluide au niveau de la seconde sortie de fluide (122) et à une température d'un fluide au niveau de l'entrée de fluide (118) ;
**caractérisé en ce qu'**un écoulement de fluide à travers la première sortie de fluide (120) dans le boîtier est ajusté, sur la base de la température, par un contrôleur (128) qui ajuste l'écoulement de fluide à travers l'entrée de fluide (118) du tube vortex (116) de telle sorte que le tube vortex (116) chauffe l'intérieur (114) du boîtier pour réguler la température de fonctionnement du dispositif de commande de processus (104).

9. Procédé selon la revendication 8, comprenant en outre la déviation d'une partie du fluide d'une alimentation en fluide (124) pour le dispositif de commande de processus (104) vers l'entrée de fluide (118) du tube vortex (116).

10. Procédé selon la revendication 8, comprenant en outre la division de l'écoulement de la première partie du fluide depuis la première sortie de fluide (120) du tube vortex (116) en un premier courant et un second courant, les premier et second courants étant capables de chauffer un premier composant (106) et un second composant du dispositif de commande de processus (104), respectivement.

11. Procédé selon la revendication 10, comprenant en outre l'étape consistant à diriger la seconde partie du fluide au niveau de la seconde sortie de fluide (122) du tube vortex (116) vers un environnement ambiant extérieur au boîtier (102).
